# EUROPÄISCHE PATENTSCHRIFT

(11) **EP 0 752 435 B1**
(45) Veröffentlichungstag und Bekanntmachung des Hinweises auf die Patenterteilung: **03.09.2003**
(21) Anmeldenummer: 96110027.8
(22) Anmeldetag: 21.06.1996
(51) Int. Cl.: C08G 18/62, C08G 18/79, C08G 18/75, C08G 18/76, C09J 175/00

(54) **Vernetzung von Acrylat-Schmelzhaftklebern**
Crosslinking of acrylate hot melt adhesives
Réticulation d'adhésifs thermofusibles à base d'acrylate

(30) Priorität: 04.07.1995 DE 19524250
(43) Veröffentlichungstag der Anmeldung: 08.01.1997
(73) Patentinhaber: Tesa AG, 20253 Hamburg (DE)
(72) Erfinder: Burmeister, Axel, 21244 Buchholz i.d.N. (DE); Harder, Christian, Dr., 22589 Hamburg (DE); Nagel, Christoph, 22529 Hamburg (DE); Schacht, Wolfgang, Dr., 21629 Neuwulmstorf (DE)

(56) Entgegenhaltungen:
- EP-A- 0 600 767
- EP-A- 0 608 891
- DE-A- 4 242 687
- GB-A- 2 185 988
- US-A- 4 524 104

## Beschreibung

Die Erfindung betrifft die Vernetzung von Acrylatschmelzhaftklebern und entsprechende hotmelt-Produkte.

Die bekannten Acrylatschmelzhaftkleber weisen nach der Beschichtung ohne die Zwischenschaltung eines zusätzlichen Vernetzungsschrittes bekanntlich sehr schlechte Klebeigenschaften auf, dies bezieht sich insbesondere auf die Scherfestigkeit solcher Produkte. Die bisher eingesetzten strahlenchemischen Vernetzungsverfahren (ESH, UV) erfordern das Vorhandensein eines entsprechenden technischen und kostenintensiven Maschinenparks. Ferner sind solche Verfahren bei gefüllten, gefärbten und dicken Masseschichten nur noch sehr bedingt einsetzbar.

Die bisher aus den Lösungsmittelacrylaten bekannten thermisch-chemischen Vemetzer (z.B. Chelate), sind zudem nicht auf Acrylatschmelzhaftkleber zu übertragen.

Es sind aber aus US 4,524,104 auch bereits Acrylatschmelzhaftkleber bekannt, die mit blockierten Polyisocyanaten zusammen mit Cycloamidinen oder Salzen davon als Katalysator vernetzt werden können. Nachteilig an derartigen Produkten kann für die klebtechnischen Eigenschaften zum einen der notwendige Katalysator sein, vor allem aber das bei der Vernetzung frei werdende Blockierungsmittel. Das entstehende HCN, Phenol, Caprolaktam oder dergleichen muß zudem abgesaugt und entfernt werden, mit entsprechendem Aufwand.

Auch aus der EP 608 891 A1 ist der Einsatz von Isocyanat (m-TMI) bekannt, um Vernetzungsreaktionen von Polyacrylaten zu ermöglichen. Dort wird m-TMI genutzt, um über Kondensationsreaktionen Doppelbindungen in Polymere einzuführen, welche in einem nachfolgenden Schritt strahlenchemisch vernetzt werden können. Auch dabei treten daher die oben erwähnten Nachteile auf, welche sich aus einer strahlenchemischen Vernetzung ergeben.

Aufgabe dieser Erfindung war es, hier Abhilfe zu schaffen, um weiter die Vorteile von Acrylatschmelzhaftklebern mit denen der chemisch-thermisch vernetzbaren Lösungsmittelmassen zu verbinden, d.h. thermisch stabile, UV-beständige und weitgehend lösungsmittelresistente Produkte lösungsmittelfrei unter Nutzung der für 100%-Systeme bekannten hohen Produktionsgeschwindigkeiten herzustellen.

Gelöst wird diese Aufgabe wie in den Patentansprüchen näher gekennzeichnet, mit dem Vorteil, daß Rezepturen und verfahrenstechnische Erkenntnisse, die in Lösungsmittelsystemen erarbeitet wurden, sich dabei direkt auf die 100%-Systeme übertragen lassen; und mit dem weiteren Vorteil, daß keine Blockierungsmittel frei werden und dennoch eine Verarbeitung unter Temperatur in 100% Acrylatsystemen gewährleistet ist.

Gegenüber den vorbekannten Vernetzungen mit blockierten Polyisocyanaten und Cycloamidin ergibt sich dabei der weitere Vorteil, einen Verfahrensschritt einzusparen, nämlich die Verkapselung, sowie die Möglichkeit, bei niedriger Temperatur zu vernetzen, was insbesondere bei empfindlichen Trägermaterialien bedeutsam ist.

Als erfindungsgemäß eingesetzte Acrylat-Schmelzhaftkleber können durchaus die bekannten derartigen Produkte eingesetzt werden, die wegen der erwünschten klebtechnischen Eigenschaften ohnehin regelmäßig im Copolymerisat geringe Anteile Acrylsäure und/oder andere funktionelle Gruppen aufweisende Monomere einpolymerisiert enthalten. Damit sind derartige Copolymerisate NCOreaktiv, insbesondere durch funktionelle Gruppen wie COOH, OH, NH₂, NH, CONH₂ und SH, gegebenenfalls auch NCO selbst. So können insbesondere Acrylsäure, Hydroxy(meth)acrylate und/oder amino- bzw. iminogruppenhaltige Acrylate einpolymerisiert sein. Bevorzugt sind dabei insbesondere Acrylatcopolymerisate, die von 0,1 bis 40, insbesondere von 2 bis 20 Gew.-% NCO-reaktive Monomere einpolymerisiert enthalten, insbesondere Acrylsäure, Maleinsäureanhydrid, N-tert.Butylacrylamid und / oder 2-Hydroxypropylacrylat.

Als blockierungsmittelfreie Isocyanate können erfindungsgemäß insbesondere sterisch gehinderte oder dimerisierte Isocyanate eingesetzt werden, mit dem großen Vorteil, daß bei hervorragenden Vemetzungsergebnissen keine Blockierungsmittel frei werden. Die dimerisierten Isocyanate haben darüber hinaus den Vorteil, daß aufgrund der erforderlichen höheren Vemetzungstemperaturen eine einfache Einarbeitung des Isocyanats am Kneter in die Massen möglich ist. Weiterhin ergeben sie Vorteile im Beschichtungsprozeß.

Erfindungsgemäß ist es vorteilhaft, wenn von 20 bis 99 Gew.-%, insbesondere von 40 bis 97 Gew.-% Acrylat-Schmelzhaftkleber und von 0,1 bis 80 Gew.-%, insbesondere von 3 bis 60 Gew.-% Isocyanat eingesetzt werden.

Alle Isocyanate sind prinzipiell durch bekannte Beschleuniger im Hinblick auf die Reaktionstemperatur und -zeit steuerbar. Alternativ besteht die Möglichkeit, durch das Einpolymerisieren von NCO-gruppenhaltigen Monomeren unter Nutzung des gleichen Vernetzungsprinzips eine Vernetzung über Polyole zu erreichen.

Die Massen können zur Verbesserung der klebtechnischen Eigenschaften, sowohl mit den üblichen Klebharzen (Gew.-% 5 - 70) und mit anderen reaktiven Komponenten, welche OH, COOH- und/oder NH₂-Gruppen enthalten, wie z.B. Polyether-/Polyesterole (Gew.-% 5- 70), abgemischt werden.

Ein Beispiel für ein sterisch gehindertes Isocyanat ist das Produkt TMXDI der Cyanamid, ein Beispiel für ein dimerisiertes Isocyanat ist Desmodur TT der Bayer AG.

Entsprechend hergestellte Massen können als Nachstrich oder viskoelastische Trägerschicht eingesetzt werden.

Beim Einsatz von acrylsäurehaltigen Massen ist eine Schäumung (Nachstrich/Träger mit dem Vorteil eines reduzierten Massebedarfs) möglich.

Durch die Isocyanatvernetzung lassen sich zudem insbesondere bei gefüllten/gefärbten Massen im Vergleich zur strahlenchemischen Vernetzung deutlich höhere Vernetzungsgrade erzielen.

Erfindungsgemäß eröffnet sich durch die Kombination von strahlenchemischer Vorvernetzung der Produkte, die ein einfacheres Handling ermöglicht, mit dem entsprechenden Nachvernetzungspotential der Isocyanate der Weg zu neuen Produkten, z.B. zu neuen Sicherheitsetiketten, Motorenkennzeichnung usw. Diese kann man ES- oder UV-vorvernetzt fixieren, danach durch Erwärmen die Isocyanat-Vernetzung starten, um so z.B. eine Wiederablösbarkeit zu verhindern. Die klebtechnischen Daten ergeben hervorragende Werte.

Die Massen können zudem ungefüllt oder aber auch zusätzlich mit Füllstoffen (Ruß, TiO₂, Voll- oder Hohlglaskugeln, Microballons oder Keimbildner wie Aerosil R 972 etc.) abgemischt, eingesetzt werden.

### Beispiele

### Massepolymerisation

Die folgenden Monomergemische (Mengenangaben in Gew.-%) wurden in Lösung copolymerisiert. Die Polymerisationsansätze bestanden aus 60 Gew.-% der Monomergemische sowie 40 Gew.-% Lösungsmittel (wie Benzin 60/95 und Aceton). Die Lösungen wurden in üblichen Reaktionsgefäßen aus Glas oder Stahl (mit Rückflußkühler, Rührer, Temperaturmeßeinheit und Gaseinleitungsrohr) zunächst durch Spülen mit Stickstoff von Sauerstoff befreit und dann zum Sieden erwärmt.

Durch Zusatz von 0,2 bis 0,4 Gew.-% eines für die radikalische Polymerisation üblichen Initiators, wie Dibenzolperoxid, Dilauroylperoxid oder Azobisisobutyronitril wurde die Polymerisation ausgelöst. Während der Polymerisationszeit von etwa 20 Stunden wurde je nach Viskosität ggf. mehrmals mit weiterem Lösungsmittel verdünnt, so daß die fertigen Polymerlösungen einen Feststoffgehalt von 35 bis 55 Gew.-% aufwiesen.

### Masseabmischung und Aufkonzentration

je nach Rezeptur und Beschaffenheit des Füllstoffs wurde die Abmischung entweder vor oder nach der Aufkonzentration in entsprechend dafür geeigneten Apparaturen vorgenommen. Die Aufkonzentration findet durch Erniedrigen des Druckes und Erhöhung der Temperatur statt.

### Rezepturen

### Beispiel 1

- Klebmasse (als Nachstrich zu verwenden):
   2-Ethylhexylacrylat / n-Butylacrylat/ 2-Hydroxypropylacrylat/ Maleinsäureanhydrid 30 / 60 / 6/3 (Gew.-%) oder
   2-Ethylhexylacrylat/ n-Butylacrylat/ Acrylsäure/ Maleinsäureanhydrid 30 / 60 / 6/3
- vernetzt mit 0,4 Gew.-% Desmodur TT bei 90°C für 14 d
- Klebtechnische Eigenschaften und Schertest ergeben hervorragende Werte

### Beispiel 2

- Trägerschicht auf Acrylatbasis
   n-Butylacrylat / N-tert. Butylacrylamid/ 2-Hydroxypropylacrylat 80/ 14/6 (Gew.-%)
- abgemischt mit 30 Gew.-% Vollglaskugeln, vernetzt mit 3 % Desmodur TT 14 d bei 90°C
- Klebtechnische Eigenschaften (nach beidseitiger Beschichtung der Trägerschicht mit Nachstrich) und Schertest ergeben hervorragende Werte.

### Beispiel 3

- geschäumte Klebmasse:
   n-Butylacrylat/N-tert. Butylacrylamid/ 2-Hydroxypropylacrylat 80 / 14 / 6 (Gew.-%)
- abgemischt mit 30 Gew.-% Vollglaskugeln, 3 Gew.-% IPDI 1540, 0,05 Gew.% DBTL, 7,5 Gew.-% AEROSIL R 972
- vernetzt 15 min, 170°C
- Schäumungsrate: 130 %.

### Verarbeitung

Die Beschichtung fand auf dafür geeigneten Anlagen statt, wobei Temperatur und Geschwindigkeit der Beschichtung mit den Konzentrationen und Eigenschaften der Vernetzer und Katalysatoren in Einklang gebracht wurden.

## Patentansprüche

1. Verwendung von blockierungsmittelfreien Isocyanaten zum chemisch/thermischen Vernetzen von Acrylatschmelzhaftklebern (hotmelt).

2. Verwendung nach Anspruch 1, **dadurch gekennzeichnet, daß** als blockierungsmittelfreie Isocyanate sterisch gehinderte oder dimerisierte Isocyanate eingesetzt werden.

3. Verwendung nach Anspruch 1, **dadurch gekennzeichnet, daß** als Acrylatschmelzhaftkleber ein Copolymerisat mit NCO-reaktivem funktionellen Gruppen verwendet wird.

4. Verwendung nach Anspruch 1, **dadurch gekennzeichnet, daß** von 20 bis 99 Gew.-%, insbesondere von 40 bis 97 Gew.-% Acrylat-Schmelzhaftkleber und von 0,1 bis 80, insbesondere von 3 bis 60 Gew.-% Isocyanat eingesetzt werden.

5. Verwendung nach Anspruch 1, **dadurch gekennzeichnet, daß** eine zusätzliche Vernetzung mittels Elektronenstrahlen oder UV-Strahlen ggf. unter Einsatz entsprechender Komponenten erfolgt, insbesondere vor der chemisch-thermischen Vernetzung.

6. Verwendung nach Anspruch 1, **dadurch gekennzeichnet, daß** zusätzliche Füllstoffe, Blähmittel, Hohlglaskugeln, Vollglaskugeln, Compoundierungsmittel und / oder Trägerfolien für Klebebänder eingesetzt werden.

7. Mit blockierungsmittelfreien Isocyanaten chemisch-thermisch vernetzbare Acrylatschmelzhaftkleber nach einem der Ansprüche 1 - 6.

## Claims

1. Use of isocyanates which are free from blocking agent for the chemical/thermal crosslinking of acrylate hot-melt pressure-sensitive adhesives (hot melts).

2. Use according to Claim 1, **characterized in that** the isocyanates employed which are free from blocking agent are sterically hindered or dimerized isocyanates.

3. Use according to Claim 1, **characterized in that** the acrylate hot-melt pressure-sensitive adhesive used is a copolymer having NCO-reactive functional groups.

4. Use according to Claim 1, **characterized in that** from 20 to 99% by weight, in particular from 40 to 97% by weight, of acrylate hot-melt pressure-sensitive adhesive and from 0.1 to 80% by weight, in particular from 3 to 60% by weight, of isocyanate are employed.

5. Use according to Claim 1, **characterized in that** additional crosslinking is carried out by means of electron beams or UV radiation, with or without the use of corresponding components, and in particular prior to chemical-thermal crosslinking.

6. Use according to Claim 1, **characterized in that** additional fillers, blowing agents, hollow glass balls, solid glass balls, compounding agents and/or carrier films for adhesive tapes are employed.

7. Acrylate hot-melt pressure-sensitive adhesives according to one of Claims 1 - 6 which are chemically-thermally crosslinkable with isocyanates which are free from blocking agent.

## Revendications

1. Utilisation d'isocyanates exempts d'agents de blocage pour réticuler chimiquement et thermiquement des adhésifs thermofusibles à base d'acrylate (hotmelt).

2. Utilisation selon la revendication 1, **caractérisée en ce que** des isocyanates empêchés stériquement ou dimérisés sont utilisés en tant qu'isocyanates exempts d'agents de blocage.

3. Utilisation selon la revendication 1, **caractérisée en ce qu'**un copolymère présentant des groupes fonctionnels NCO réactifs est utilisé en tant qu'adhésif thermofusible à base d'acrylate.

4. Utilisation selon la revendication 1, **caractérisée en ce que** de 20 à 99 % en poids, en particulier de 40 à 97 % en poids d'adhésif thermofusible à base d'acrylate et de 0,1 à 80 % en poids, en particulier de 3 à 60 % en poids d'isocyanate sont utilisés.

5. Utilisation selon la revendication 1, **caractérisée en ce qu'**une réticulation supplémentaire au moyen de rayons électroniques ou de rayons UV, le cas échéant en utilisant des composants correspondants, se produit, en particulier avant la réticulation chimique et thermique.

6. Utilisation selon la revendication 1, **caractérisée en ce que** des charges supplémentaires, agents gonflants, sphères de verre creuses, sphères de verre pleines, agents de mélange et/ou des feuilles supports pour bandes adhésives sont utilisées.

7. Adhésifs thermofusibles à base d'acrylate selon l'une quelconque des revendications 1 à 6 réticulables chimiquement et thermiquement par des isocyanates exempts d'agents de blocage.
